# EUROPÄISCHE PATENTANMELDUNG

(11) **EP 1 591 350 A2**
(43) Veröffentlichungstag der Anmeldung: **02.11.2005**
(21) Anmeldenummer: 05009060.4
(22) Anmeldetag: 26.04.2005
(51) Int. Cl.: B62D 55/215, B62D 55/21

(54) **Gleiskette für Kettenfahrzeuge**

(30) Priorität: 27.04.2004 DE 102004020600
(71) Anmelder: Intertractor GmbH, 58285 Gevelsberg (DE)
(72) Erfinder: Tintrup, Dr. Frank, 44627 Herne (DE); Halama, Helmut, 46049 Oberhausen (DE)
(74) Vertreter: Köchling, Conrad-Joachim

(57) **Zusammenfassung**

Um eine Gleiskette für Kettenfahrzeuge, insbesondere kettengetriebene Bau- und Sonderfahrzeuge, sowie für fördertechnische Einrichtungen, bestehend aus Kettenbuchsen (1), Schonbuchsen (2), Kettenbolzen (3) und Kettengliedern (4,5), wobei zur Bildung eines Scharniergelenks die innen liegenden Kettengliederenden (5) auf die Kettenbuchse (1) und die außen liegenden Kettengliederenden (4) auf die die Kettenbuchse (1) axial überragenden Enden der Kettenbolzen (2) aufgepresst sind, wobei die Kettenbuchsen (1) von Schonbuchsen (2) umgeben sind, zu schaffen, bei der die Geräuschemission vermindert ist, die gleichzeitig kostengünstig gefertigt werden kann und eine hohe Lebensdauer aufweist, wird vorgeschlagen, dass zwischen der Kettenbuchse (1) und der Schonbuchse (2) eine elastische Zwischenschicht (6) angeordnet ist.

## Beschreibung

Die Erfindung betrifft eine Gleiskette für Kettenfahrzeuge, insbesondere kettengetriebene Bau-und Sonderfahrzeuge, sowie für fördertechnische Einrichtungen, bestehend aus Kettenbuchsen, Schonbuchsen, Kettenbolzen und Kettengliedern, wobei zur Bildung eines Scharniergelenks die innen liegenden Kettengliederenden auf die Kettenbuchse und die außen liegenden Kettengliederenden auf die die Kettenbuchse axial überragenden Enden der Kettenbolzen aufgepresst sind, wobei die Kettenbuchsen von Schonbuchsen umgeben sind.

Eine derartige Gleiskette ist beispielsweise aus der EP 1 069 032 A2 bekannt.
Dabei ist es zur Vermeidung von entstehenden Quietschgeräuschen notwendig, einen entsprechenden Spielraum zwischen der Außenseite der Kettenbuchse und der Innenseite der Schonbuchse vorzusehen.

Konstruktionsbedingt entsteht bei einer derartigen Lösung beim Einlaufen der Zähne eines Zahnrades, z.B. eines Antriebs- oder Umlenkrades in die Gleiskette ein Schlag, welcher mit einem Klack-Geräusch verbunden ist. Zusätzlich zu dem Einlaufgeräusch wird der Verschleiß der Gleiskette erhöht und somit die Lebensdauer gesenkt.

Ausgehend von diesem Stand der Technik liegt der Erfindung die Aufgabe zugrunde, eine Gleiskette gattungsgemäßer Art zu schaffen, bei der die Geräuschemission vermindert ist, die gleichzeitig kostengünstig gefertigt werden kann und eine hohe Lebensdauer aufweist.

Zur Lösung dieser Aufgabe schlägt die Erfindung vor, dass zwischen der Kettenbuchse und der Schonbuchse eine elastische Zwischenschicht angeordnet ist.

Durch eine derartige Anordnung einer elastischen Zwischenschicht werden die beim Eingreifen der Zahnräder eines Zahnrades in die Gleiskette entstehenden Geräusche weitestgehend gemindert. Auch wird ein direktes Aufeinandertreffen bzw. Aneinanderreihen der beiden üblicherweise aus Metall bestehenden Oberflächen der Außenseite der Kettenbuchse und der Innenseite der Schonbuchse und die damit verbundenen Quietschgeräusche vermieden. Somit wird sowohl eine Geräuschminderung als auch eine Verschleißminderung und damit erhöhte Lebensdauer bewirkt.

Bevorzugt kann dabei vorgesehen sein, dass die elastische Zwischenschicht auf der inneren Mantelfläche der Schonbuchse und/ oder auf der äußeren Mantelfläche der Kettenbuchse angeordnet ist.

Weiter kann besonders bevorzugt vorgesehen sein, dass die elastische Zwischenschicht aus Kunststoffverbundstoffen mit vorzugsweise thermoplastischen Legierungen als Basis kombiniert mit Verbundfasern und/ oder Festschmierstoffen besteht.

Die Verwendung von Kunststoffverbundstoffen mit vorzugsweise thermoplastischen Legierungen als Basis kombiniert mit Verbundfasern und/oder Festschmierstoffen, ermöglicht den Einsatz der elastischen Zwischenschicht zur Verwendung der Gleiskette unter verschiedensten Anwendungsbedingungen. Je nach Verwendungszweck kommen verschiedene thermoplastische Legierungen zum Einsatz. Diese Legierungen werden kombiniert mit einem Netzwerk aus Verbundfasern. Dabei bildet das Netzwerk das Rückgrat der Konstruktion, welches hohe Druckfestigkeiten, Wärmeformbeständigkeit und Kriechfestigkeit erreicht. Dabei weisen die Verbundfasern selbst gute tribologische Eigenschaften auf. Ein weiterer Anteil ist ein Gemisch aus Festschmierstoffen, welches mit der jeweils ausgewählten Legierung und den. Verbundfasern harmoniert. Derartige Werkstoffe können beispielsweise unter dem Gesichtspunkt Schwingungsdämpfung oder besseres Schmutzeinbettungsverhalten verwendet werden.

Auch kann besonders bevorzugt vorgesehen sein, dass die elastische Zwischenschicht eine dem Einsatzbereich angepasste Schichtdicke, insbesondere eine Schichtdicke von bis zu 0,5 mm aufweist.

Darüber hinaus kann besonders bevorzugt vorgesehen sein, dass die elastische Zwischenschicht als weitere Buchse ausgebildet ist, die im Ringspalt zwischen Kettenbuchse und Schonbuchse angeordnet ist.

Eine derartige Ausführungsform ermöglicht ein schnelles und einfaches Einschieben einer weiteren Buchse in den zwischen Kettenbuchse und Schonbuchse vorhandenen Ringspalt.

Schließlich kann besonders bevorzugt vorgesehen sein, dass die Buchse eine Wandstärke von 0,5 bis 2,0 mm aufweist.

Durch die Erfindung wird eine kostengünstig zu fertigende Gleiskette zur Verfügung gestellt, die eine hohe Lebensdauer bei gleichzeitig geringem Verschleiß und äußerst geringer Geräuschentwicklung aufweist.

Ein Ausführungsbeispiel der Erfindung ist in der Zeichnung dargestellt und im Folgenden näher beschrieben.

Es zeigt:

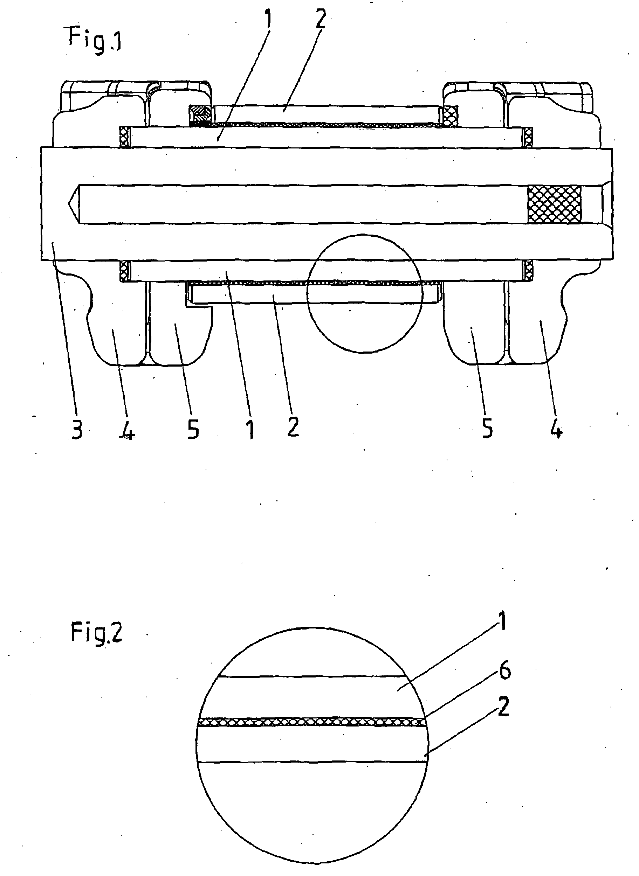

- Figur 1: ein Gelenk einer erfindungsgemäßen Gleiskette;
- Figur 2: die in Figur 1 gekennzeichnete Ausschnittsvergrößerung aus Figur 1;

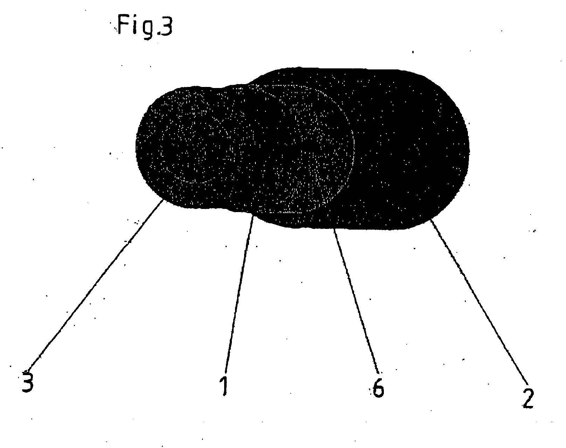

- Figur 3: den schematischen Aufbau eines erfindungsgemäßen Kettenbolzens mit Kettenbuchse, elastischer Zwischenschicht und Schonbuchse.

In den Figuren ist eine Gleiskette für Kettenfahrzeuge gezeigt. Derartige Gleisketten werden insbesondere für kettengetriebene Bau- und Sonderfahrzeuge, sowie für fördertechnische Einrichtungen verwendet. Die Gleiskette besteht im Wesentlichen aus Kettenbuchsen 1, Schonbuchsen 2, Kettenbolzen 3 und Kettengliedern 4, 5. Dabei sind zur Bildung eines Scharniergelenks die innen liegenden Kettengliederenden 5 auf die Kettenbuchse 1 und die außen liegenden Kettengliederenden 4 auf die die Kettenbuchse 1 axial überragenden Enden der Kettenbolzen 2 aufgepresst. Die Kettenbuchsen 1 sind dabei von Schonbuchsen 2 umgeben.

Erfindungsgemäß ist zwischen der Kettenbuchse 1 und der Schonbuchse 2 eine elastische Zwischenschicht 6 angeordnet.

Die elastische Zwischenschicht 6 verringert die beim Einlaufen der Zähne eines Zahnrades in die Gleiskette entstehenden Geräusche deutlich, wobei gleichzeitig der Verschleiß der Gleiskette vermindert und somit die Lebensdauer verlängert wird, da die Außenmantelfläche der Kettenbuchse 1 nicht mehr in direktem Kontakt mit der Innenmantelfläche der Schonbuchse 2 steht.

Die elastische Zwischenschicht 6 kann auf der inneren Mantelfläche der Schonbuchse 2 und/oder auf der äußeren Mantelfläche der Kettenbuchse 1 angeordnet sein. Dabei besteht die elastische Zwischenschicht 6 aus Kunststoffverbundstoffen mit vorzugsweise thermoplastischen Legierungen als Basis kombiniert mit Verbundfasern und/oder Festschmierstoffen. Dabei ist die Auswahl des Kunststoffverbundstoffes abhängig von dem jeweiligen Einsatzgebiet der Kette. Auch die Schichtdicke der elastischen Zwischenschicht 6 ist dabei dem Einsatzbereich angepasst. Üblicherweise beträgt die Schichtdicke etwa bis zu 0,5 mm.

Die in den Figuren gekennzeichnete elastische Zwischenschicht 6 kann alternativ auch als weitere Buchse ausgebildet sein, die im Ringspalt zwischen Kettenbuchse 1 und Schonbuchse 2 angeordnet ist. Eine derartige weitere Buchse weist üblicherweise eine Wandstärke von etwa 0,5 bis 2,0 mm auf.

Durch die Erfindung wird eine kostengünstig zu fertigende Gleiskette zur verfügung gestellt, bei der die beim Einlaufen des Zahnrades in die Kette entstehenden Schlaggeräusche weitestgehend vermieden sind, deren Geräuschemission beim Dauerbetrieb gesenkt wurde, und deren Lebensdauer erhöht wurde.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Gleiskette für Kettenfahrzeuge, insbesondere kettengetriebene Bau- und Sonderfahrzeuge, sowie für fördertechnische Einrichtungen, bestehend aus Kettenbuchsen (1), Schonbuchsen (2), Kettenbolzen (3) und Kettengliedern (4,5), wobei zur Bildung eines Scharniergelenks die innen liegenden Kettengliederenden (5) auf die Kettenbuchse (1) und die außen liegenden Kettengliederenden (4) auf die die Kettenbuchse (1) axial überragenden Enden der Kettenbolzen (2) aufgepresst sind, wobei die Kettenbuchsen (1) von Schonbuchsen (2) umgeben sind,
**dadurch gekennzeichnet, dass** zwischen der Kettenbuchse (1) und der Schonbuchse (2) eine elastische Zwischenschicht (6) angeordnet ist.

2. Gleiskette nach Anspruch 1,
**dadurch gekennzeichnet, dass** die elastische Zwischenschicht (6) auf der inneren Mantelfläche der Schonbuchse (2) und/ oder auf der äußeren Mantelfläche der Kettenbuchse (1) angeordnet ist.

3. Gleiskette nach Anspruch 1 oder Anspruch 2,
**dadurch gekennzeichnet, dass** die elastische Zwischenschicht (6)aus Kunststoffverbundstoffen mit vorzugsweise thermoplastischen Legierungen als Basis kombiniert mit Verbundfasern und/ oder Festschmierstoffen besteht.

4. Gleiskette nach einem der Ansprüche 1 bis 3,
**dadurch gekennzeichnet, dass** die elastische Zwischenschicht (6) eine dem Einsatzbereich angepasste Schichtdicke, insbesondere eine Schichtdicke von bis zu 0,5 mm aufweist.

5. Gleiskette nach einem der Ansprüche 1 bis 3,
**dadurch gekennzeichnet, dass** die elastische Zwischenschicht (6) als weitere Buchse ausgebildet ist, die im Ringspalt zwischen Kettenbuchse (1) und Schonbuchse (2) angeordnet ist.

6. Gleiskette nach Anspruch 5,
**dadurch gekennzeichnet, dass** die Buchse eine Wandstärke von 0,5 bis 2,0 mm aufweist.
